# EUROPÄISCHE PATENTSCHRIFT

(11) **EP 1 654 518 B1**
(45) Veröffentlichungstag und Bekanntmachung des Hinweises auf die Patenterteilung: **23.09.2009**
(21) Anmeldenummer: 04741692.0
(22) Anmeldetag: 01.06.2004
(51) Int. Cl.: G01C 19/56, G01P 21/00, B60T 8/00, B60R 21/01

(54) **SICHERHEITSEINRICHTUNG FÜR EINEN DREHRATENSENSOR**
SECURITY DEVICE FOR A ROTATION RATE SENSOR
DISPOSITIF DE SECURITE POUR UN CAPTEUR DE VITESSE DE ROTATION

(30) Priorität: 30.06.2003 DE 10329511
(43) Veröffentlichungstag der Anmeldung: 10.05.2006
(73) Patentinhaber: Continental Automotive GmbH, 30165 Hannover (DE)
(72) Erfinder: MORELL, Heinz-Werner, 67659 Kaiserslautern (DE); SCHMID, Dietmar, 65606 Villmar (DE)
(86) Internationale Anmeldenummer: PCT/EP2004/050977
(87) Internationale Veröffentlichungsnummer: WO 2005/001380

(56) Entgegenhaltungen:
- EP-A- 1 167 922
- US-A- 5 839 096
- US-A1- 2002 178 813

## Beschreibung

Die Erfindung betrifft eine Sicherheitseinrichtung für einen Sensor, insbesondere einen Drehratensensor, bei welchem ein Sensorelement und funktionale Komponenten die Funktion des Sensors bewirken und ein Sensorausgangssignal erzeugen, wobei die funktionalen Komponenten eine Funktionssektion bilden, wobei ferner Kontrollkomponenten in einer Kontrollsektion vorgesehen sind, wobei die Kontrollkomponenten zur laufenden Kontrolle der funktionalen Komponenten ausgebildet sind,

Beispielsweise aus EP 0 461 761 B1 sind Drehratensensoren bekannt geworden, bei welchen ein Vibrationskreisel in zwei radial ausgerichteten Achsen angeregt wird, wozu ein primärer und ein sekundärer Regelkreis mit entsprechenden Wandlern an dem Vibrationskreisel vorgesehen sind. Werden derartige Drehratensensoren in Fahrzeugen zur Stabilisierung der Fahrzeugbewegung eingesetzt, so können durch Ausfall oder fehlerhafte Funktion Gefährdungen auftreten. Um diese zu vermeiden, ist eine Funktionsüberwachung des Drehratensensors erforderlich.

Zur Selbstdiagnose eines vorausschauenden Kollisionssensorsystems ist die Kontrolle von funktionalen Komponenten durch US 5,839,096 bekannt. Ferner sind Diagnoseschaltungen für Vibrationsgyroskope durch EP 1 167 922 A1 und US 2002/178813 A1 veröffentlicht worden. Diese Einrichtungen genügen jedoch nicht den hohen Sicherheitsanforderungen, die an Sensoren der oben genannten Art zu stellen sind.

Eine besonders zuverlässige Überwachung ist bei der erfindungsgemäßen Sicherheitseinrichtung dadurch möglich, dass ferner in einer Überwachungssektion Überwachungskomponenten zur Überwachung von Kontrollkomponenten mindestens einmal während eines Betriebszyklus ausgebildet sind und dass die Überwachungssektion eine Komponente zur Überwachung des Takts eines in der Kontrollsektion enthaltenen Mikrocomputers, eine Watchdog-Schaltung zur Überwachung des Mikrocomputers und eine Einrichtung zur Prüfung von Speichern innerhalb der Kontrollsektion enthält.

Ein Vorteil der erfindungsgemäßen Sicherheitseinrichtung besteht darin, dass durch die laufende Kontrolle schnelle Fehlermeldungen möglich sind, die dem Benutzer und übergeordneten Systemen den Fehler und damit das eventuell fehlerhafte Sensorausgangssignal melden. Diese schnelle Reaktion wird ergänzt durch eine Überwachung der Kontrollsektion, so dass auch Fehler gemeldet werden, die zwar nicht unmittelbar zu einem falschen Sensorausgangssignal führen, jedoch bei Auftreten eines zweiten Fehlers zu Gefährdungen führen können. Eine Redundanz der funktionalen Komponenten ist dazu nur in einem geringen Umfang erforderlich.

Bei einer vorteilhaften Ausgestaltung ist vorgesehen, dass die Kontrollkomponenten zur Messung von Werten in der Funktionssektion und zum Vergleich der gemessenen Werte mit Grenzwerten ausgebildet sind. Vorzugsweise sind dabei die Kontrollkomponenten ferner zur Messung des Sensorausgangssignals und zum Vergleich des gemessenen Sensorausgangssignals mit Grenzwerten ausgebildet.

Noch bessere Kontrolle ermöglicht eine Weiterbildung dieser Ausgestaltung, die darin besteht, dass die Kontrollkomponenten ferner zu Tests der funktionalen Komponenten ausgebildet sind, wobei Testsignale erzeugt und den funktionalen Komponenten zugeführt werden und die Reaktion der funktionalen Komponenten auf die Testsignale gemessen wird.

Bei relativ komplexen Sensoren enthält die Funktionssektion Digital- und Analog-Komponenten, wozu bei der erfindungsgemäßen Einrichtung vorgesehen ist, dass die Kontrollkomponenten zum Zugriff auf Register der Digital-Komponenten und zur Messung von Analogsignalen an den Analog-Komponenten ausgebildet sind. Um die Kontrollmöglichkeiten weiter auszudehnen, kann dabei vorgesehen sein, dass die Kontrollsektion eigene Analog-Komponenten und mindestens einen Analog/Digital-Wandler enthält.

Elektronische Schaltungen einschließlich programmierbarer Einrichtungen werden häufig von anwendungsspezifischen integrierten Schaltkreisen, kurz ASIC genannt, gebildet. Diese umfassen eine sehr große Anzahl von Torschaltungen, die häufig doppelt genutzt werden, wenn es der jeweilige Signalfluss bzw. die Verknüpfungslogik zulassen. Um die durch die erfindungsgemäße Sicherheitseinrichtung erzielte hohe Sicherheit nicht zu gefährden, ist bei einer Weiterbildung der Erfindung vorgesehen, dass Komponenten der Funktionssektion, der Kontrollsektion und der Überwachungssektion von einem anwendungsspezifischen integrierten Schaltkreis (ASIC) gebildet sind und dass in dem Schaltkreis enthaltene Torschaltungen jeweils nur einer der Sektionen zugeordnet sind.

Die Erfindung lässt zahlreiche Ausführungsformen zu. Eine davon ist schematisch in der Zeichnung anhand mehrerer Figuren dargestellt und nachfolgend beschrieben. Es zeigt:
- Fig. 1:: eine schematische Darstellung der verschiedenen Sektionen und
- Fig. 2:: ein Blockschaltbild einer erfindungsgemäßen Einrichtung am Beispiel eines Drehratensensors.

Das Ausführungsbeispiel sowie Teile davon sind zwar als Blockschaltbilder dargestellt. Dieses bedeutet jedoch nicht, dass die erfindungsgemäße Anordnung auf eine Realisierung mit Hilfe von einzelnen den Blöcken entsprechenden Schaltungen beschränkt ist. Die erfindungsgemäße Anordnung ist vielmehr in besonders vorteilhafter Weise mit Hilfe von hochintegrierten Schaltungen realisierbar. Dabei können Mikroprozessoren eingesetzt werden, welche bei geeigneter Programmierung die in den Blockschaltbildern dargestellten Verarbeitungsschritte durchführen. Im Zusammenhang mit der Erfindung sind unter Komponenten Schaltungen, Computer, Speicher und ähnliche Hardware einschließlich der zugehörigen Programme und Programmmodule zu verstehen.

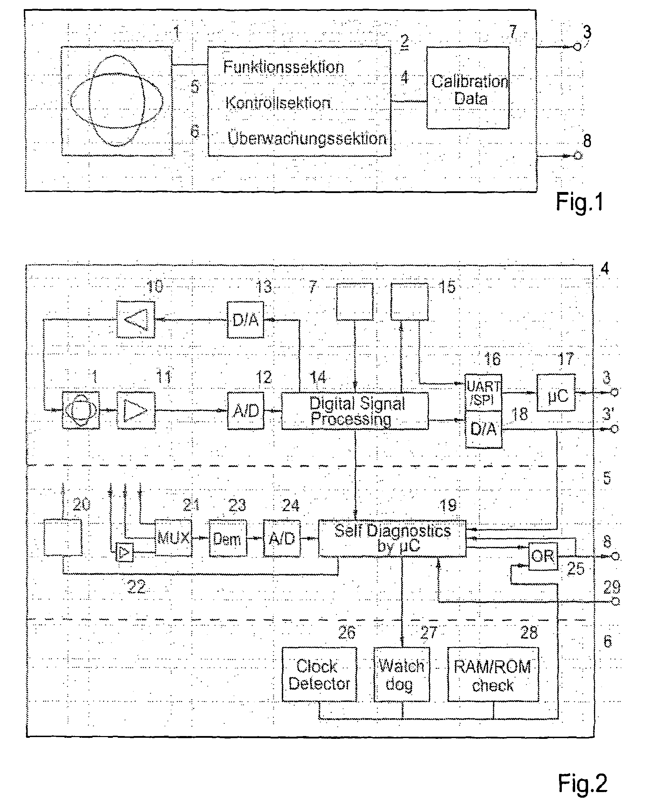

Die schematische Darstellung nach Fig. 1 zeigt einen Vibrationskreisel 1, zu dessen Betrieb Schaltungen 2 vorgesehen sind. Dabei ist eine Sektion dieser Schaltungen für den eigentlichen Betrieb des Vibrationskreisels 1 und für die Erzeugung eines an einem Ausgang 3 anstehenden Drehratensignals vorgesehen. Diese Sektion wird im folgenden Funktionssektion 4 genannt. Zur laufenden Überwachung dienen weitere Schaltungen, die zu einer Kontrollsektion 5 zusammengefasst sind. Diese wird schließlich von einer Überwachungssektion 6 überwacht. Ein nichtflüchtiger Speicher 7 dient zur Ablage von Abgleichdaten. Ein weiterer Ausgang 8 ist zur Ausgabe eines Alarmsignals vorgesehen.

Bei dem Blockschaltbild gemäß Fig. 2 sind Komponenten der Sektionen 4, 5, 6 etwas detaillierterer dargestellt. So sind beispielsweise zum Betrieb des Vibrationskreisels 1 zwei Verstärker 10, 11, ein Analog/Digital-Wandler 12 und ein Digital/Analog-Wandler 13 vorgesehen. Weitere Komponenten, beispielsweise Filter, sind zum Verständnis der Erfindung nicht erforderlich und daher nicht näher dargestellt und erläutert. Die vom Vibrationskreisel 1 abgenommenen, bei 11 verstärkten und bei 12 digitalisierten Signale werden bei 14 digital verarbeitet, woraus ein Treibersignal entsteht, das über den Digital/Analog-Wandler 13 und den Verstärker 10 einem Eingang des Vibrationskreisels zugeführt wird.

Beim Einschalten werden aus dem nichtflüchtigen Speicher 7 Abgleichdaten geladen. Über einen Mikrocomputer 15 werden aus der digitalen Signalverarbeitung 14 Daten entnommen, welche das Drehratensignal beinhalten, und über eine UART/SPI-Schnittstelle 16 einem weiteren Mikrocomputer 17 zugeleitet.

Dieser führt ein digitales Drehratensignal an den Ausgang 3. Parallel dazu ist an die digitale Signalverarbeitung 14 ein Digital/Analog-Wandler 18 angeschlossen, an dessem Ausgang 3' ein analoges Drehratensignal anliegt.

Die Kontrollsektion wird im Wesentlichen von einer Selbstdiagnose 19 durch den Mikrocomputer gebildet, wobei Daten der digitalen Signalverarbeitung 14 zur Verfügung stehen. Außerdem weist die Kontrollsektion zur Prüfung von Analog-Komponenten der Funktionssektion einen von der Selbstdiagnose 19 steuerbaren Testsignalinjektor 20 auf, der analoge Testsignale an wählbaren Stellen den Analogschaltungen der Funktionssektion zuführen kann. Mehrere Punkte der Analogschaltungen der Funktionssektion 4 sind mit einem Multiplexer 21 verbunden, so dass ein wählbares Analogsignal kontrolliert werden kann.

Für den Fall, dass eines dieser Analogsignale eine kleinere Amplitude aufweisen sollte, ist ein Verstärker 22 vorgesehen. Bei dem Ausführungsbeispiel sind die zu kontrollierenden Analogsignale trägerfrequent. Deshalb schließt sich an den Multiplexer 21 ein Demodulator 23 an. Nach einer Analog/DigitalWandlung 24 kann die Selbstdiagnose 19 auf die zu kontrollierenden Analogsignale zugreifen. Zur weiteren Prüfung erhält die Selbstdiagnose 19 vom Ausgang 3' das analoge Ausgangssignal und vom Ausgang 8 das Alarmsignal. Stellt die Selbstdiagnose 19 einen Fehler fest, wird über die Oderschaltung 25 und den Ausgang 8 ein Alarmsignal abgegeben. Die Alarmsignalisierung erfolgt auch über ein Statusbit im seriellen Datentelegramm der UART/SPI-Schnittstelle.

Die Überwachung des Programmlaufs im Mikrocomputer, sowie des Vorhandenseins eines Taktsignals und die einwandfreie Funktion der Speicher werden in der Überwachungssektion 6 mit Hilfe eines Taktdetektors 26, eines Watchdogs 27 und einer RAM/ROM-Prüfung 28 durchgeführt. Stellt eine dieser Komponenten einen Fehler fest, wird über die Oderschaltung 25 und den Ausgang 8 ein Alarmsignal ausgegeben. Über einen Eingang 29 kann eine Selbstdiagnose gestartet werden, beispielsweise bei Wartungsarbeiten oder in einer Betriebspause des Fahrzeugs.

## Patentansprüche

1. Sicherheitseinrichtung für einen Drehratensensor, bei welchem ein Sensorelement und funktionale Komponenten die Funktion des Sensors bewirken und ein Sensorausgangssignal erzeugen, wobei die funktionalen Komponenten (1, 10 bis 18) eine Funktionssektion (4) bilden, wobei ferner Kontrollkomponenten (19 bis 25) in einer Kontrollsektion (5) und Überwachungskomponenten (26, 27, 28) in einer Überwachungssektion (6) vorgesehen sind, wobei die Kontrollkomponenten (19 bis 25) zur laufenden Kontrolle der funktionalen Komponenten (1, 10 bis 18) ausgebildet sind, wobei die Überwachungskomponenten (26, 27, 28) zur Überwachung der Kontrollkomponenten (19 bis 25) mindestens einmal während eines Betriebszyklus ausgebildet sind und wobei die Überwachungssektion (6) eine Komponente (26) zur Überwachung des Takts eines in der Kontrollsektion enthaltenen Mikrocomputers (19), eine Watchdog-Schaltung (27) zur Überwachung des Mikrocomputers (19) und eine Einrichtung (28) zur Prüfung von Speichern innerhalb der Kontrollsektion (5) enthält.

2. Einrichtung nach Anspruch 1, **dadurch gekennzeichnet, dass** die Kontrollkomponenten (19 bis 25) zur Messung von Werten in der Funktionssektion (4) und zum Vergleich der gemessenen Werte mit Grenzwerten ausgebildet sind.

3. Einrichtung nach Anspruch 2, **dadurch gekennzeichnet, dass** die Kontrollkomponenten (19 bis 25) ferner zur Messung des Sensorausgangssignals und zum Vergleich des gemessenen Sensorausgangssignals mit Grenzwerten ausgebildet sind.

4. Einrichtung nach einem der Ansprüche 2 oder 3, **dadurch gekennzeichnet, dass** die Kontrollkomponenten (19 bis 25) ferner zu Tests der funktionalen Komponenten (1, 10 bis 18) ausgebildet sind, wobei Testsignale erzeugt und den funktionalen Komponenten (1, 10 bis 18) zugeführt werden und die Reaktion der funktionalen Komponenten (1, 10 bis 18) auf die Testsignale gemessen wird.

5. Einrichtung nach einem der Ansprüche 2 bis 4, **dadurch gekennzeichnet, dass** die Funktionssektion (4) Digital- (14 bis 17) und Analog-Komponenten (1, 10, 11) enthält und dass die Kontrollkomponenten zum Zugriff auf Register der Digital-Komponenten (14 bis 17) und zur Messung von Analogsignalen an den Analog-Komponenten (1, 10, 11) ausgebildet sind.

6. Einrichtung nach Anspruch 5, **dadurch gekennzeichnet, dass** die Kontrollsektion (5) eigene Analog-Komponenten (20 bis 23) und mindestens einen Analog/Digital-Wandler (24) enthält.

7. Einrichtung nach einem der vorhergehenden Ansprüche, **dadurch gekennzeichnet, dass** Komponenten der Funktionssektion (4), der Kontrollsektion (5) und der Überwachungssektion (6) von einem anwendungsspezifischen integrierten Schaltkreis (ASIC) gebildet sind und dass in dem Schaltkreis enthaltene Torschaltungen jeweils nur einer der Sektionen zugeordnet sind.

## Claims

1. Safety device for a rotation rate sensor, in which a sensor element and functional components provide the function of the sensor and produce a sensor output signal, wherein the functional components (1, 10 to 18) form a function section (4) and wherein, furthermore, checking components (19 to 25) are provided in a checking section (5) and monitoring components (26, 27, 28) are provided in a monitoring section (6), with the checking components (19 to 25) being designed for continuous checking of the functional components (1, 10 to 18), and wherein the monitoring components (26, 27, 28) are designed for monitoring of the checking components (19 to 25) at least once during one operating cycle and wherein the monitoring section (6) has a component (26) for monitoring the clock of a microcomputer (19) which is contained in the checking section, a watchdog circuit (27) for monitoring the microcomputer (19) and a device (28) for testing memories within the checking section (5).

2. Device according to Claim 1, **characterized in that** the checking components (19 to 25) are designed to measure values in the function section (4) and to compare the measured values with limit values.

3. Device according to Claim 2, **characterized in that** the checking components (19 to 25) are furthermore designed to measure the sensor output signal and to compare the measured sensor output signal with limit values.

4. Device according to one of Claims 2 or 3, **characterized in that** the checking components (19 to 25) are furthermore designed to test the functional components (1, 10 to 18), with test signals being produced and being supplied to the functional components (1, 10 to 18), and the reaction of the functional components (1, 10 to 18) to the test signals being measured.

5. Device according to one of Claims 2 to 4, **characterized in that** the function section (4) contains digital components (14 to 17) and analog components (1, 10, 11), and **in that** the checking components are designed to access registers of the digital components (14 to 17) and to measure analog signals at the analog components (1, 10, 11).

6. Device according to Claim 5, **characterized in that** the checking section (5) contains its own analog components (20 to 23) and at least one analog/digital converter (24).

7. Device according to one of the preceding claims, **characterized in that** components in the function section (4), in the checking section (5) and in the monitoring section (6) are formed by an application-specific integrated circuit (ASIC), and **in that** gate circuits which are contained in the circuit are in each case associated with only one of the sections.

## Revendications

1. Dispositif de sécurité pour capteur de vitesse de rotation, dans lequel un organe détecteur et des composantes fonctionnelles réalisent la fonction capteur et délivrent un signal de sortie du capteur, où les composantes fonctionnelles (1, 10 à 18) forment un groupe fonctionnel (4), où, par ailleurs, des composantes de contrôle (19 à 25) sont prévues dans un groupe de contrôle (5) et des composantes de supervision (26, 27, 28) sont prévues dans un groupe de supervision (6), où les composantes de contrôle (19 à 25) sont conçues pour assurer un contrôle permanent des composantes fonctionnelles (1, 10 à 18), où les composantes de supervision (26, 27, 28) sont conçues pour superviser les composantes de contrôle (19 à 25) au moins une fois pendant un cycle de fonctionnement et où le groupe de supervision (6) renferme une composante (26) destinée à superviser la cadence d'un micro-ordinateur (19) contenu dans le groupe de contrôle, un circuit chien de garde (ou watch-dog) (27) destiné à superviser le micro-ordinateur (19) et un dispositif (28) destiné à contrôler les mémoires à l'intérieur du groupe de contrôle (5).

2. Dispositif selon la revendication 1, **caractérisé par le fait que** les composantes de contrôle (19 à 25) sont conçues pour mesurer des valeurs dans le groupe fonctionnel (4) et pour comparer des valeurs mesurées à des valeurs seuil.

3. Dispositif selon la revendication 2, **caractérisé par le fait que** les composantes de contrôle (19 à 25) sont, en outre, conçues pour mesurer le signal de sortie du capteur et pour comparer à des valeurs seuil le signal de sortie du capteur qui a été mesuré.

4. Dispositif selon l'une des revendications 2 ou 3, **caractérisé par le fait que** les composantes de contrôle (19 à 25) sont, en outre, conçues pour effectuer des tests des composantes fonctionnelles (1, 10 à 18), des signaux de test étant produits et appliqués aux composantes fonctionnelles (1, 10 à 18) et la réaction des composantes fonctionnelles (1, 10 à 18) aux signaux de test étant alors mesurée.

5. Dispositif selon l'une des revendications 2 à 4, **caractérisé par le fait que** le groupe fonctionnel (4) renferme des composantes numériques (14 à 17) et des composantes analogiques (1, 10, 11) et que les composantes de contrôle sont conçues pour avoir accès à des registres des composantes numériques (14 à 17) et pour mesurer des signaux analogiques sur les composantes analogiques (1, 10, 11) .

6. Dispositif selon la revendication 5, **caractérisé par le fait que** l'ensemble de contrôle (5) renferme lui-même des composantes analogiques (20 à 23) et au moins un convertisseur analogique/numérique (24).

7. Dispositif selon l'une des revendications précédentes, **caractérisé par le fait que** les composantes du groupe fonctionnel (4), du groupe de contrôle (5) et du groupe de supervision (6) sont formées par un circuit logique intégré (ASIC) spécifique à l'application et que des circuits portes contenus dans le circuit logique intégré correspondent chacun seulement à l'un des groupes.
